# EUROPEAN PATENT APPLICATION

(11) **EP 4 815 061 A1**
(43) Date of publication of application: **30.09.2026**
(21) Application number: 26150158.9
(22) Date of filing: 05.01.2026
(51) Int. Cl.: H01M 4/58, H01M 4/62, H01M 10/0562, H01M 10/052

(54) **CATHODE COMPOSITE MATERIAL AND BATTERY**

(30) Priority: 25.03.2025 JP 2025050080
(71) Applicant: Toyota Jidosha Kabushiki Kaisha, Toyota-shi, Aichi-ken 471-8571 (JP)
(72) Inventor: Ryo, ASAKURA, Toyota-shi, Aichi-ken 471-8571 (JP); Shinya, SHIOTANI, Toyota-shi, Aichi-ken 471-8571 (JP)
(74) Representative: Winter, Brandl - Partnerschaft mbB

(57) **Abstract**

A cathode composite material of the present disclosure contains Li₂S, a P-containing sulfide, and carbon. A G/2D band ratio found from a Raman spectrum of the cathode composite material is 6.00 or less. By using the cathode composite material of the present disclosure to fabricate a battery, the battery that is yielded is likely to have excellent cycle characteristics.

## Description

### BACKGROUND OF THE INVENTION

### 1. Field of the Invention

The present application discloses a cathode composite material and a battery.

### 2. Description of Related Art

Japanese Unexamined Patent Application Publication No. 2019-212615 (JP 2019-212615 A) discloses a battery using a cathode composite material containing a sulfur-based cathode active material.

### SUMMARY OF THE INVENTION

Batteries using a cathode composite material containing a sulfur-based cathode active material have room for improvement in terms of cycle characteristics.

The present application discloses a plurality of aspects below as means to solve the above issue.
Aspect 1 A cathode composite material including
   Li₂S, a P-containing sulfide, and carbon, in which
   a G/2D band ratio found from a Raman spectrum of the cathode composite material is 6.00 or less.
Aspect 2 The cathode composite material according to Aspect 1, in which a D/G band ratio found from a Raman spectrum of the cathode composite material is 1.10 or more.
Aspect 3 The cathode composite material according to Aspect 1 or 2, in which a BET specific surface area of the carbon is 1500 m²/g or more.
Aspect 4 A battery including a cathode composite material layer, an electrolyte layer, and an anode, in which
   the cathode composite material layer contains the cathode composite material according to any one of Aspects 1 to 3.
Aspect 5 The battery according to Aspect 4, in which the electrolyte layer contains a solid electrolyte.

When using the cathode composite material of the present disclosure to fabricate the battery, the battery that is yielded is likely to have excellent cycle characteristics.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically illustrates an example of a configuration of a battery including a cathode composite material according to the present disclosure;
FIG. 2 shows an X-ray diffraction pattern of the cathode composite material according to Example 1;
FIG. 3 shows a Raman spectrum of carbon before mixing, and a Raman spectrum of the cathode composite material after mixing, for each of Comparative Examples and Examples;
FIG. 4 schematically illustrates a configuration of a press cell of each of Comparative Examples and Examples; and
FIG. 5 shows cycle characteristics of each of the press cells of Comparative Examples and Examples.

### DETAILED DESCRIPTION OF EMBODIMENTS

Hereinafter, an embodiment of a cathode composite material, a battery, and so forth according to the present disclosure will be described, but the cathode composite material, the battery, and so forth according to the present disclosure are not limited to the embodiment described below.

### 1. Cathode Composite Material

The cathode composite material according to the present embodiment includes Li₂S, a P-containing sulfide, and carbon. The cathode composite material has a G/2D band ratio of 6.00 or lower in a Raman spectrum.

### 1.1 Li₂S

The cathode composite material according to the present embodiment contains Li₂S. Part of the Li₂S functions as a sulfur-based active material, and also part thereof can form an ion-conducting phase by reacting or the like with a P-containing sulfide described below. The form of the Li₂S contained in the cathode composite material is not limited in particular, and may be, for example, particulate. Whether the cathode composite material contains the Li₂S can be determined by subjecting the cathode composite material to various analyses such as X-ray Diffraction (XRD) analysis, X-ray Absorption Fine Structure (XAFS) analysis, Nuclear Magnetic Resonance (NMR) spectroscopy, and so forth.

The amount (amount charged) of Li₂S contained in the cathode composite material may be, for example, 30% by mass or more and 70% by mass or less, 40% by mass or more and 60% by mass or less, or 45% by mass or more and 50% by mass or less. Alternatively, the amount of Li₂S contained in the cathode composite material may be adjusted such that molar ratios Li/P and Li/S described below are satisfied.

### 1.2 P-Containing Sulfide

The cathode composite material according to the present embodiment includes P-containing sulfide. The P-containing sulfide contributes to formation of the ion conduction phase in the cathode composite material. The P-containing sulfide is a compound containing P and other elements as constituent elements. The P-containing sulfide contains at least P and S as constituent elements, and may further contain another element M. Examples of the other element M include one type, or two types, or more of Ge, Sn, Si, B, and Al. Also, the P-containing sulfide may include P, S, and an optional element M as constituent elements, but on the other hand does not have to include Li. The cathode composite material according to one embodiment may contain, for example, P₂S₅ as the P-containing sulfide. Also, the P-containing sulfide may have an ortho structure of the P element (PS₄ structure). Also, the P-containing sulfide may be joined to part of the above Li₂S to become amorphous, or the like, and may be present as PS₄³⁻, P₂S₆⁴, or P₂S₇⁴⁻.

The form of the P-containing sulfide contained in the cathode composite material is not limited in particular, and may be, for example, particulate, or may be indefinite in form. Whether the cathode composite material contains the P-containing sulfide can be determined by subjecting the cathode composite to various analyses such as XAFS analysis, XRD analysis, NMR spectroscopy, or the like.

The amount (amount of charge) of the P-containing sulfide contained in the cathode composite material may be, for example, 10% by mass or more and 50% by mass or less, 20% by mass or more and 40% by mass or less, or 25% by mass or more and 35% by mass or less. Alternatively, the amount of the P-containing sulfide contained in the cathode composite material may be adjusted such that the molar ratio Li/P described below is satisfied.

### 1.3 Carbon

The cathode composite material according to the present embodiment contains carbon. Carbon functions as a conductive material in the cathode composite material. Carbon is, for example, elemental carbon. Carbon may be one type, two types, or more of carbon nanotubes, vapor grown carbon fibers (VGCF), acetylene black, furnace black, Ketjen black, activated carbon, and graphene. Also, the carbon contained in the cathode composite material may be porous carbon such as activated carbon or the like.

The carbon contained in the cathode composite material may have a specific surface area of a certain level or more. For example, the Brunauer-Emmett-Teller (BET) specific surface area of the carbon may be 1000 m²/g or more, 1300 m²/g or more, or 1500m²/g or more, and may be 2500 m²/g or less, 2000 m²/g or less, or 1700 m²/g or less. It is believed that the larger the BET specific surface area of the carbon is, the better the conductivity of the cathode composite material will be, ensuring better cycle characteristics. In particular, when the BET specific surface area of the carbon is 1500 m²/g or more, better cycle characteristics are readily ensured. In one embodiment, the carbon contained in the cathode composite material may be porous carbon having a specific surface area of 1500 m²/g or more. Alternatively, in one embodiment, the carbon contained in the cathode composite material may be single-walled carbon nanotubes having a specific surface area of *1100* m²/g or more. Note that the BET specific surface area of the carbon contained in the cathode composite material can be found by the BET method using nitrogen as adsorption gas. Specifically, the carbon used in the cathode composite material is vacuum dried at 120 °C for 12 hours, and then the BET specific surface area (m²/g) of the carbon is measured using a specific surface area measuring device (BERSORP-MAX (Microtrac BEL Co., Ltd.)) in compliance with JIS Z8830:2013, for example.

The amount of carbon contained in the cathode composite material is not limited in particular, and may be determined as appropriate depending on intended battery performance. In one embodiment, the carbon content in the cathode composite material may be more than 0% by mass and 50% by mass or less, 5% by mass or more and 40% by mass or less, or 10% by mass or more and 30% by mass or less. Alternatively, the amount of carbon contained in the cathode composite material may be adjusted to satisfy a molar ratio C/S described later.

### 1.4 Other Components

The cathode composite material may contain other components than the above. The contents of the other components in the cathode composite material are not limited in particular. The cathode composite material may contain the Li-containing sulfide, P-containing sulfide, and carbon, which are described above, in a total amount of 90% by mass or more, 95% by mass or more, or 99% by mass or more. Also, the cathode composite material according to the present embodiment does not have to contain elemental sulfur as a sulfur-based active material. For example, the amount of the elemental sulfur contained in the cathode composite material may be less than 1.0% by mass.

### 1.5 Molar Ratios Li/P, Li/S and C/S

In the present embodiment, the molar ratio Li/P of Li to P contained in the cathode composite material may be, for example, 3.0 or more and 30.0 or less, 4.0 or more and 20.0 or less, or 5.0 or more and 10.0 or less. Also, the molar ratio Li/S of Li to S contained in the cathode composite material may be, for example, 0.5 or more and 2.0 or less, 0.7 or more and 1.7 or less, or 1.0 or more and 1.5 or less. Also, the molar ratio C/S of C to S contained in the cathode composite material may be, for example, 0.50 or more and 1.50 or less, 0.60 or more and 1.40 or less, 0.70 or more and 1.30 or less, 0.80 or more and 1.20 or less, or 0.90 or more and 1.10 or less. Note that the molar ratios Li/P, Li/S, and C/S can be identified by analyzing the types and amounts of elements contained in the cathode composite material.

### 1.6 Raman Spectrum

### 1.6.1 G/2D Band Ratio

The G/2D band ratio found from the Raman spectrum of the cathode composite material according to the present embodiment is 6.00 or less. When the G/2D band ratio is small, it is believed that, even though the carbon contained in the cathode composite material has disturbances and defects in the graphene structure having sp² hybridization, the layer structure of the graphene structure is diversified, making it easier to ensure a conductive path in the cathode composite material. Accordingly, the conductivity of the cathode composite material overall is improved, ensuring excellent cycle characteristics. The G/2D band ratio can be controlled by the type of carbon used in the cathode composite material and conditions under which the cathode composite material is produced (mechanical energy imparted to carbon). The cathode composite material can be produced by applying mechanical energy to a mixture containing Li₂S, P-containing sulfide, and carbon, which will be described later. Now, by using carbon that has predetermined physical properties (G/2D band ratio, etc.) before mixing, as the carbon to be mixed with the Li₂S and the P-containing sulfide, and also controlling the amount of mechanical energy applied to the mixture (when mechanical energy is applied using a ball mill, the rotation speed, processing time, number of times of performing processing, etc., of the ball mill), the carbon can be physically or chemically bonded to the Li₂S and the P-containing sulfide, thereby diversifying the layer structure of the graphene structure in the carbon and also dispersing the carbon throughout the cathode composite material, and hence obtaining a cathode composite material that satisfies the above-described G/2D band ratio. Using such a cathode composite material to fabricate a battery enables the utilization rate of the active material to be increased, and so forth, and excellent cycle characteristics are readily ensured.

As described above, it is believed that the smaller the G/2D band ratio of the cathode composite material is, the more readily excellent cycle characteristics will be ensured. The G/2D band ratio may be 5.50 or less, 5.00 or less, 4.90 or less, 4.80 or less, 4.70 or less, 4.60 or less, 4.50 or less, 4.40 or less, or 4.30 or less. The lower limit of the G/2D band ratio is not limited in particular, and may be, for example, 3.00 or more, 3.50 or more, 4.00 or more, 4.10 or more, or 4.20 or more. In one embodiment, the G/2D band ratio may be, for example, 4.00 or more and 5.00 or less, 4.10 or more and 4.90 or less, or 4.20 or more and 4.80 or less.

### 1.6.2 D/G Band Ratio

The D/G band ratio found from the Raman spectrum of the cathode composite material according to the present embodiment may be, for example, 1.10 or more. When the D/G band ratio is great, the graphene structure of the carbon contained in the cathode composite material has large disturbances and defects. In other words, this D/G band ratio of 1.10 or more means that strong energy is imparted to the carbon during the production of the cathode composite material, to the extent that the graphene structure of the carbon collapses, and the carbon is sufficiently mixed with the Li₂S and the P-containing sulfide active material (i.e., the carbon is well mixed in the cathode composite material). The cathode composite material can be produced by applying mechanical energy to a mixture containing Li₂S, P-containing sulfide, and carbon nanotubes, which will be described later. Here, by controlling the amount of mechanical energy applied to the mixture (when mechanical energy is applied by a ball mill, the rotation speed, processing time, number of times of performing processing, etc. of the ball mill) and sufficiently mixing the Li₂S, the P-containing sulfide, and the carbon such that the above D/G band ratio is satisfied, carbon can be physically or chemically bonded to the Li₂S and the P-containing sulfide, and also the carbon can be dispersed throughout the cathode composite material, thereby improving the electronic conductivity of the cathode composite material overall. As a result, when the battery is fabricated, the utilization rate of the active material is increased, and so forth, and excellent cycle characteristics are readily ensured.

As described above, it is believed that the larger the D/G band ratio of the cathode composite material is, the more readily excellent cycle characteristics will be ensured. The D/G band ratio may be 1.15 or more, 1.20 or more, 1.25 or more, 1.30 or more, 1.35 or more, 1.40 or more, or 1.45 or more. The upper limit of the D/G band ratio is not limited in particular, and may be, for example, 2.00 or less, 1.90 or less, 1.80 or less, 1.70 or less, or 1.60 or less. In one embodiment, the D/G band ratio may be, for example, 1.10 or more and 1.70 or less, or 1.30 or more and 1.60 or less.

### 1.6.3 Raman Spectrum Acquisition Conditions and Acquisition Method

Acquisition conditions for acquiring the Raman spectrum of the cathode composite material are as follows.
(I) Powder of the cathode composite material is subjected to Raman spectroscopy measurement under the following conditions, at room temperature in an Ar atmosphere, using XploRA PLUS manufactured by Horiba, Ltd.
   Grating: 1200
   Laser wavelength: 532 nm
   Laser power: 1%
(II) In the Raman spectrum obtained by Raman spectroscopy measurement, the maximum intensity of the peak derived from the G band appearing near 1590 cm⁻¹ and the maximum intensity of the peak derived from the 2D band appearing near 2700 cm⁻¹ are identified, and the peak intensity of the G band relative to the peak intensity of the 2D band is identified as the G/2D band ratio. Furthermore, in the Raman spectrum, the maximum intensity of the peak derived from the G band appearing near 1590 cm⁻¹ and the maximum intensity of the peak derived from the D band appearing near 1350 cm⁻¹ are identified, and the peak intensity of the D band relative to the peak intensity of the G band is identified as the D/G band ratio.

### 2. Production Method of Cathode Composite Material

The cathode composite material according to the present embodiment can be produced by the following method, for example. That is to say, a method for producing a cathode composite material according to one embodiment includes
S1: obtaining a mixture containing Li₂S , a P-containing compound, and carbon, and
S2: applying mechanical energy to the mixture.

Here, by controlling the type of carbon contained in the mixture and the mechanical energy applied to the mixture, the G/2D band ratio found from the Raman spectrum of the mixture following applying the mechanical energy becomes 6.00 or less. For example, by forming a mixture using carbon having a G/2D band ratio of 6.00 or less as found from the Raman spectrum, and then subjecting the mixture to mechanical milling using a ball mill at a rotation speed of 400 rpm for a total of 36 hours, for example, the G/2D band ratio that is found from the Raman spectrum of the mixture after the mechanical milling is likely to be 6.00 or less. The specific conditions of the ball mill (rotation speed, processing time, number of times of performing processing, etc.) are not limited to those described above, and any conditions may be employed that result in a G/2D band ratio in the cathode composite material of 6.00 or less.

### 3. Battery

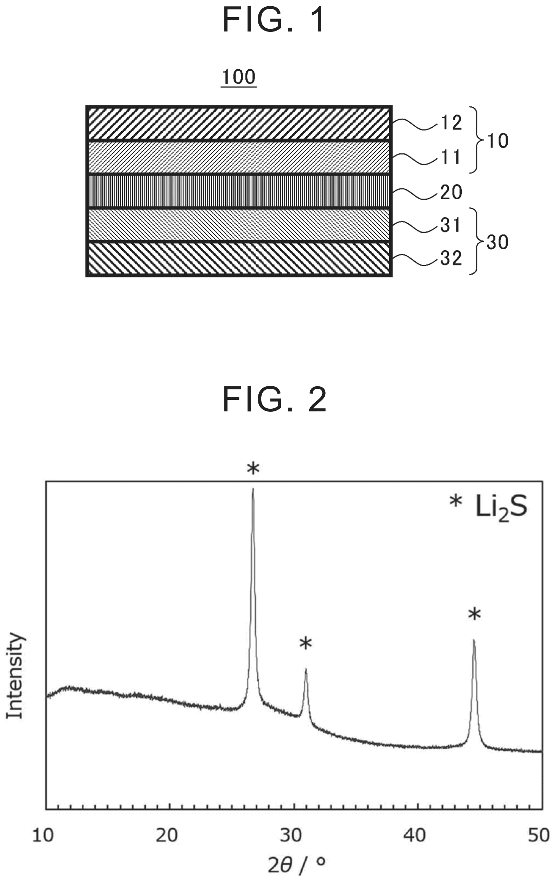

When using the cathode composite material according to the present embodiment to fabricate the battery, the battery that is yielded is likely to have excellent cycle characteristics. As illustrated in FIG. 1, a battery 100 according to one embodiment includes a cathode composite material layer 11, an electrolyte layer 20, and an anode 30. The cathode composite material layer 11 includes the cathode composite material according to the above embodiment.

### 3.1 Cathode

The form and thickness of the cathode composite material layer 11 in a cathode 10 are not limited in particular, and may be determined as appropriate, taking into consideration the intended battery performance and so forth. The cathode composite material layer 11 may be in the form of a sheet having a substantially flat face. The thickness of the cathode composite material layer 11 may be, for example, 0.1 µm or more, 1 µm or more, 10 µm or more, or 30 µm or more, and may be 2 mm or less, 1 mm or less, 500 µm or less, or 100 µm or less. Also, as illustrated in FIG. 1, the cathode 10 of the battery 100 may include a cathode current collector 12 that is in contact with the cathode composite material layer 11. The constituent material, form, size, and so forth of the cathode current collector 12 are not limited in particular.

### 3.2 Electrolyte Layer

The electrolyte layer 20 is disposed between the cathode composite material layer 11 and the anode 30. The electrolyte layer 20 contains at least an electrolyte. The electrolyte layer 20 may contain at least one of a solid electrolyte and a liquid electrolyte (electrolytic solution), and may further optionally contain a binder, and so forth. In particular, when the electrolyte layer 20 contains the solid electrolyte, higher performance is more readily ensured. The electrolyte layer 20 may be a solid electrolyte layer that does not contain a liquid electrolyte. The solid electrolyte may be an inorganic solid electrolyte or an organic polymer electrolyte. In particular, inorganic solid electrolytes are excellent in ion conductivity and heat resistance. Examples of the inorganic solid electrolyte include an oxide solid electrolyte, a sulfide solid electrolyte, an ionic inorganic solid electrolyte, and so forth. From among the inorganic solid electrolytes, sulfide solid electrolytes, and further from thereamong, sulfide solid electrolytes containing at least Li, S, and P as constituent elements, have high performance. Alternatively, from among the inorganic solid electrolytes, ionic solid electrolytes, and further from thereamong, solid electrolytes containing at least Li, Y, and a halogen (at least one of Cl, Br, I, and F) as constituent elements, have high performance. The solid electrolyte may be amorphous or crystalline. The solid electrolyte may be particulate.

### 3.3 Anode

The anode 30 may include, for example, an anode active material layer 31 and an anode current collector 32 that is in contact with the anode active material layer 31. In one embodiment, the anode 30 may be one in which charging is accompanied by metallic lithium being precipitated, and discharging is accompanied by metallic lithium being dissolved. In this case, the metallic lithium is deemed to be making up the anode active material layer 31. In this case, "metallic lithium" is a concept that includes not only elemental lithium but also lithium alloys. That is to say, in the battery 100, metallic lithium may be precipitated as elemental lithium, or may be precipitated as an alloy together with other metals. Examples of the lithium alloy include Li-Mg, Li-Sn, Li-Al, Li-B, Li-C, Li-Si, Li-Ca, Li-Ga, Li-Ge, Li-As, Li-Se, Li-Ru, Li-Rh, Li-Pd, Li-Ag, Li-Au, Li-Cd, Li-In, Li-Sb, Li-Ir, Li-Pt, Li-Hg, Li-Pb, Li-Bi, Li-Zn, Li-Tl, Li-Te, and Li-At. The lithium alloy may be one type alone, or two or more types. Also, in this case, an intermediate layer may be present between the electrolyte layer 20 and the anode 30 for the purpose of achieving uniform precipitation and dissolution of metallic lithium, and so forth. The type of the intermediate layer is not limited in particular, and may be a layer containing an element that can be alloyed with metallic lithium. The amount of metallic lithium precipitated between the electrolyte layer 20 and the anode current collector 32 is not limited in particular, and may be adjusted as appropriate depending on intended battery performance. Alternatively, the anode active material layer 31 contains an anode active material, and may optionally contain an electrolyte, a conductive aid, a binder, various types of additives, and so forth. The content of each component in the anode active material layer 31 may be determined as appropriate depending on intended battery performance. In this case, the form of the anode active material layer 31 is not limited in particular, and may be, for example, a sheet having a substantially flat face. In this case, the thickness of the anode active material layer 31 is not limited in particular, but may be, for example, 0.1 µm or more, 1 µm or more, 10 µm or more, or 30 µm or more, and may be 2 mm or less, 1 mm or less, 500 µm or less, or 100 µm or less. Any material known to be an anode active material for a battery can be employed as the anode active material. Examples of the anode active material that can be employed include silicon-based active materials such as Si, Si alloys, silicon oxide, and so forth; carbon-based active materials such as graphite, hard carbon, and so forth; various types of oxide-based active materials such as lithium titanate, and so forth; and the above-described metallic lithium, lithium alloys, and so forth. Alternatively, the anode active material may be metallic lithium in the form of a foil or film, as described above. That is to say, the anode active material layer 31 may be made of a sheet of the anode active material. The electrolyte and so forth that can be included in the anode active material layer 31 are not limited in particular. Any current collector that can function as an anode current collector for a battery can be employed as the anode current collector 32.

### 3.4 Others

In addition to the above configurations, the battery 100 may have general configurations for a battery. Examples thereof include tabs, terminals, and so forth. The battery 100 may be a battery in which the above configurations are housed inside an outer casing. Also, a plurality of the batteries 100 may be electrically connected in an optional manner and also stacked in an optional manner to fabricate a battery pack. Examples of the form of the battery 100 include a coin, a laminate, a cylinder, a rectangle, and so forth. The battery 100 may include a restraining member for restraining each of the above configurations in the thickness direction. The battery 100 may be a secondary battery. Also, the battery 100 may be a lithium sulfur battery (LiS battery). Also, the battery 100 may be an all-solid-state battery that is substantially does not contain liquid electrolyte. Further, the battery 100 may be an all-solid-state lithium sulfur battery. The battery 100 can be fabricated by a known method, except for including the above cathode composite material.

Thus, the cathode composite material, the battery, and so forth, according to one embodiment have been described above, but the technology of the present disclosure can be modified in various ways other than the above embodiment without departing from the spirit thereof. The technology of the present disclosure will be described in more detail below with reference to examples, however, the technology of the present disclosure is not limited to the following examples.

### 1. Production of Cathode Composite Material

Li₂S, P₂S₅ serving as a P-containing sulfide, and various types of carbon (120 °C vacuum dried product) were weighed out to a mass ratio of Li₂S:P₂S₅:C = 50.9:29.6:19.5, and mixed in a mortar to obtain a mixture (1), following which 1.7 g of the mixture (1) and 80 g of 4 mm diameter zirconia balls were placed in each ball mill pot, and the mixture was mixed in a planetary ball mill at 400 rpm for 36 hours to obtain a mixture (2). After mixing using the planetary ball mill, the mixture (2) was dry classified using a 38 µm sieve to obtain a cathode composite material for evaluation.

Here, a cathode composite material according to a Comparative Example 1 used porous carbon (A) (G/2D band ratio: 7.96, D/G band ratio: 1.06, BET specific surface area: 1082 m²/g), a cathode composite material according to a Comparative Example 2 used porous carbon (B) (G/2D band ratio: 9.32, D/G band ratio: 1.05, BET specific surface area: 1351 m²/g), a cathode composite material according to an Example 1 used single-walled carbon nanotubes (G/2D band ratio: 4.81, D/G band ratio: 0.01, BET specific surface area: 1188 m²/g), and a cathode composite material according to an Example 2 used porous carbon (C) (G/2D band ratio: 4.29, D/G band ratio: 1.75, BET specific surface area: 1517 m²/g).

### 2. X-ray Diffraction Measurement for Cathode Composite Material

The cathode composite material produced as described above was placed in a non-exposure jig so as not to be exposed to the atmosphere, and an X-ray diffraction pattern was acquired using a Rigaku Ultima IV with CuKα radiation in a range of 2θ = 10 to 50°. FIG. 2 shows the X-ray diffraction pattern of the cathode composite material according to Example 1. Note that the X-ray diffraction patterns of Comparative Examples 1, 2 and Example 2 were similar.

### 3. Raman spectroscopy measurement

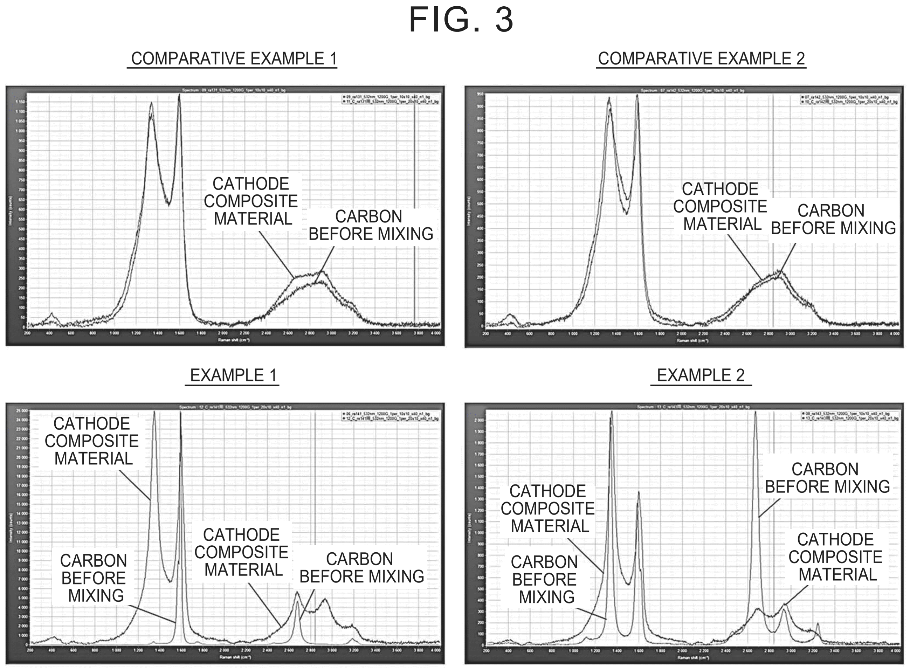

The carbon before mixing in the planetary ball mill and the cathode composite material after mixing in the planetary ball mill were each subjected to Raman spectroscopy measurement to identify the G/2D band ratio and the D/G band ratio. Measurement conditions thereof have been described in the embodiment of the present specification. Note that the G/2D band ratio and the D/G band ratio of the cathode composite material after mixing in the planetary ball mill are substantially the same as the G/2D band ratio and the D/G band ratio of the cathode composite material contained in the cathode composite after fabrication of the press cell. FIG. 3 shows the Raman spectra of the cathode composite materials of each of the Comparative Examples 1, 2, and Examples 1 and 2.

### 4. Fabrication of Press Cell

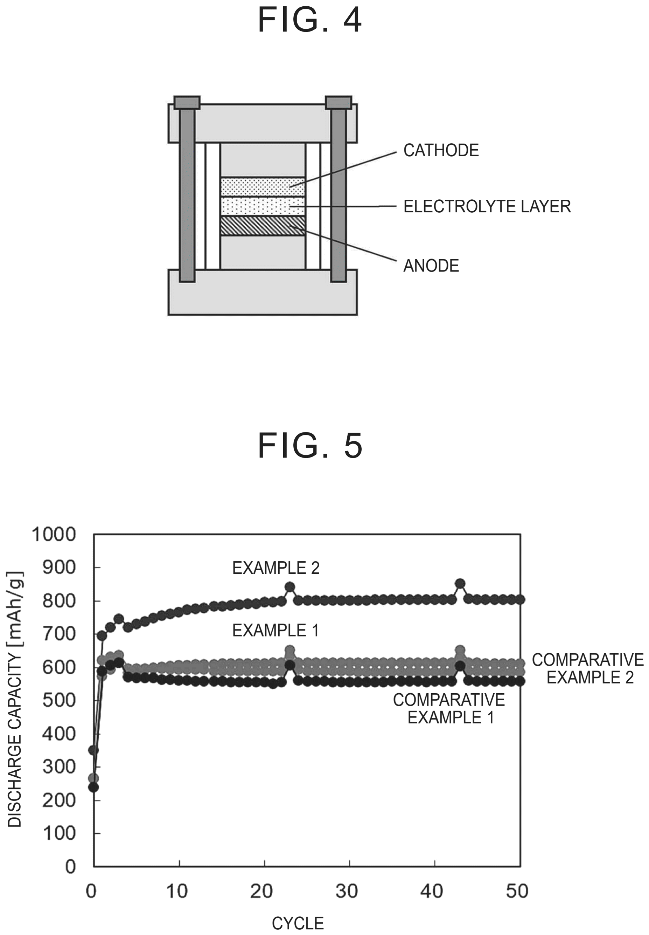

The cathode composite materials produced as described above were used to fabricate a press cell having a diameter of 11.28 mm, in accordance with the following procedures. The configuration of the press cell that was fabricated is as shown in FIG. 4.
(1) First, 100 mg of a sulfide solid electrolyte was placed in a cell and pressed at 1 ton.
(2) Next, 7.6 mg of a cathode composite material was placed above the sulfide solid electrolyte layer in the cell, and pressed at 1 ton.
(3) An Al foil punched out to a diameter of 11.28 mm was placed above the cathode composite material layer in the cell and pressed at 6 tons.
(4) A Li-10 wt% Mg alloy foil (thickness 100 µm) and a Ni foil, punched out to a diameter of 11.28 mm, were placed in this order under the sulfide solid electrolyte layer in the cell, and pressed at 1 ton.
(5) The product was restrained to a set dimension at a restraining pressure of 2 Nm (equivalent to about 30 MPa) to obtain a press cell for evaluation.

### 5. Electrochemical Measurement

The press cell fabricated as described above was subjected to a constant current charging/discharging test at 60 °C, in accordance with the following protocol, with an upper cutoff potential for charging set to 3.1 V, a lower cutoff potential for discharging set to 1.2 V vs Li⁺/Li, and 1 C = 5.84 mA/cm². Table 1 below shows the discharge capacity C₁ at the first cycle and the discharge capacity C₅₀ at the 50th cycle after conditioning in this constant current charging/discharging test. Each discharging capacity is calculated on a Li-free basis, i.e., the specific capacity is calculated by excluding the weight of Li in Li₂S in the prepared composition and deeming the resultant weight to be the weight of the cathode composite material. Also, FIG. 5 shows the discharge capacity for each cycle for each press cell of the Comparative Examples and the Examples.
(1) Conditioning (1.2 V discharging) and first to third cycles: current density of 0.584 mA/cm² equivalent to 0.1 C
(2) Fourth to 22nd cycles: current density of 1.168 mA/cm², equivalent to 0.2 C
(3) 23rd cycle: current density of 0.584 mA/cm², equivalent to 0.1 C
(4) 24th to 42nd cycles: current density of 1.168 mA/cm², equivalent to 0.2 C
(5) 43rd cycle: current density of 0.584 mA/cm², equivalent to 0.1 C
(6) 44th to 50th cycles: current density of 1.168 mA/cm², equivalent to 0.2 C

### Evaluation Results

Table 1 below shows each of the type of carbon contained in the cathode composite material and the BET specific surface area (m²/g), the G/2D band ratio and D/G band ratio found from the Raman spectrum of the mixture (1) before mixing using a ball mill, the G/2D band ratio and the D/G band ratio found from the Raman spectrum of the cathode composite material after mixing using the ball mill, the discharge capacity C₁ (mAh/g) at the first cycle and the discharge capacity C₅₀ (mAh/g) at the 50th cycle for the press cell, and the capacity retention rate C₅₀ /C₁ × 100 (%).

**Table 1**

| | Carbon type | BET specific surface area | Carbon before mixing | | Cathode composite material | | C1 | C50 | Capacity retention rate |
|---|---|---|---|---|---|---|---|---|---|
| | | | G/2D | D/G | G/2D | D/G | | | |
| Comparative Example 1 | Porous (A) | 1082 | 7.96 | 1.06 | 6.25 | 1.06 | 608 | 559 | 91.9 |
| Comparative Example 2 | Porous (B) | 1351 | 9.32 | 1.05 | 8.85 | 1.09 | 593 | 589 | 99.3 |
| Example 1 | Single-walled CNT | 1188 | 4.81 | 0.01 | 5.17 | 1.11 | 573 | 614 | 107.2 |
| Example 2 | Porous (C) | 1517 | 4.29 | 1.75 | 0.57 | 1.50 | 694 | 805 | 116.0 |

The results shown in Table 1 above and FIGS. 2, 3, and 5 demonstrate the following.

From the X-ray diffraction patterns shown in FIG. 2, it can be seen that the cathode composite materials according to the Comparative Examples and the Examples contain Li₂S, and also that the components other than Li₂S constitute an amorphous phase. Also, as shown in FIG. 3 and Table 1, the G/2D band ratios found from the Raman spectra of the cathode composite materials according to Examples 1 and 2 were 6.00 or less, whereas those of the cathode composite materials according to Comparative Examples 1 and 2 exceeded 6.00. That is to say, in Examples 1 and 2, while the carbon contained in the cathode composite material has disturbances and defects in the graphene structure having sp² hybridization, it is believed that the layer structure of the graphene structure is diversified and conductive paths are easily ensured, and it is believed that the conductivity of the cathode composite material overall is improved as compared to Comparative Examples 1 and 2. As a result, as shown in FIG. 5 and Table 1, the press cells using the cathode composite materials according to Examples 1 and 2 had more excellent cycle characteristics than the press cells using the cathode composite materials according to Comparative Examples 1 and 2.

### 7. Summarization

To summarize the above results, it can be said that when a battery is fabricated using a cathode composite material that satisfies the following (A) and (B), the battery will have excellent cycle characteristics.
(A) The cathode composite material contains Li₂S, P-containing sulfide, and carbon.
(B) The G/2D band ratio found from the Raman spectrum of the cathode composite material is 6.00 or less.

## Claims

1. A cathode composite material comprising:
Li₂S; a P-containing sulfide; and carbon, wherein
a G/2D band ratio found from a Raman spectrum of the cathode composite material is 6.00 or less.

2. The cathode composite material according to claim 1, wherein a D/G band ratio found from a Raman spectrum of the cathode composite material is 1.10 or more.

3. The cathode composite material according to claim 1, wherein a BET specific surface area of the carbon is 1500 m²/g or more.

4. A battery comprising: a cathode composite material layer; an electrolyte layer; and an anode, wherein
the cathode composite material layer contains the cathode composite material according to any one of claims 1 to 3.

5. The battery according to claim 4, wherein the electrolyte layer contains a solid electrolyte.
